# EUROPÄISCHE PATENTSCHRIFT

(11) **EP 1 064 189 B1**
(45) Veröffentlichungstag und Bekanntmachung des Hinweises auf die Patenterteilung: **29.05.2002**
(21) Anmeldenummer: 99916889.1
(22) Anmeldetag: 24.03.1999
(51) Int. Cl.: B62D 53/08

(54) **SATTELKUPPLUNG**
FIFTHWHEEL COUPLING
SELLETTE DE TRACTEUR

(30) Priorität: 27.03.1998 DE 19813635
(43) Veröffentlichungstag der Anmeldung: 03.01.2001
(73) Patentinhaber: Jost-Werke GmbH & Co. KG, 60528 Frankfurt am Main (DE)
(72) Erfinder: ALGÜERA GALLEGO, Josè Manuel, D-63739 Aschaffenburg (DE); KOETTER, Stefan, D-64546 Mörfelden-Walldorf (DE); SPITZ, Rainer, D-65347 Eltville (DE)
(74) Vertreter: Fuchs Mehler Weiss & Fritzsche
(86) Internationale Anmeldenummer: EP9902014
(87) Internationale Veröffentlichungsnummer: WO9950129

(56) Entgegenhaltungen:
- EP-A- 0 562 887
- US-A- 2 530 311

## Beschreibung

Die Erfindung betrifft eine Sattelkupplung zur gelenkigen Verbindung einer Sattelzugmaschine mit einem Sattelanhänger, mit einer auf der Sattelzugmaschine über Lagerelemente gehalterten Sattelkupplungsplatte, die einen Ausschnitt mit einer zentralen Ausnehmung und einem Schloß zur verriegelbaren Aufnahme eines am Sattelanhänger inmitten einer Aufliegerplatte fest angebrachten Königszapfen besitzt, und die eine reibungsmindernde Gleitschicht aufweist.

Sattelkupplungen dienen zum formschlüssigen, jedoch gelenkigen Verbinden einer Sattelzugmaschine mit einem Sattelanhänger, auch Sattelauflieger genannt, die dann zusammen einen sogenannten Sattelzug bilden. Die Sattelkupplung weist eine Sattelkupplungsplatte mit einem typischerweise V-Förmigen oder maulartigen Einführausschnitt, auch Kupplungs- oder Fangmaul genannt, auf, der beidseitig von je einem etwas nach unten geneigten Horn begrenzt wird. Der V-förmige Einschnitt ist typisch, aber nicht zwingend. Es kann auch ein Koppeln von oben in den Ausschnitt erfolgen. Der Einführausschnitt, das Kupplungsmaul, mündet in eine zentrale Ausnehmung ein, in der typischerweise, aber nicht zwingend, ein Verschleißring angebracht ist. Beidseitig des ggf. vorhandenen Verschleißringes befinden sich Schloßteile, insbesondere ein Verschlußhaken, die bei geöffneter Sattelkupplung außer Eingriff mit der zentralen Ausnehmung sind. Die Sattelkupplungsplatte ist dabei überwiegend über Lagerböcke und ggf. eine Montageplatte verschwenkbar mit dem Rahmen der Sattelzugmaschine verbunden.

Am Sattelanhänger befindet sich an der Unterseite des vorderen Endes eine Aufliegerplatte mit einem daran angeordneten, nach unten weisenden Zugsattel, Königszapfen genannt. Beim Kuppeln wird dieser Zugsattel, gerührt durch das Kupplungsmaul in der Sattelkupplungsplatte, in deren zentrale Ausnehmung eingeschoben, bis er in Anlage am Verschleißring kommt. Die Aufliegerplatte bildet dabei sozusagen die Gegenplatte zu der Sattelkupplungsplatte. Sobald der Königszapfen am Verschleißring anliegt, werden die Schloßteile in Schließstellung gebracht, wobei der Verschlußhaken den Königszapfen formschlüssig, jedoch drehbeweglich, umfaßt.

Sattelkupplungen der vorstehenden Art sind allgemein bekannt und werden im großen Umfang standardmäßig (DIN74080 = ISO 337) bei Sattelzügen eingesetzt.

Sattelkupplungen der vorstehenden Art müssen mehreren Anforderungen genügen. Das Gewicht des Sattelanhängers, die Stütz- oder Flächenlast, sowie alle bei Kurven- und Bergfahrt auftretenden Zug- und Druckkräfte, die über den Königszapfen eingeleitet werden, müssen auf den Rahmen der Sattelzugmaschine übertragen werden. Sattelkupplungsplatten, die gemäß dem Stand der Technik bisher ausschließlich einteilig ausgeführt sind (siehe beispielsweise DE 296 03 641 U1), müssen daher entsprechend massiv ausgebildet sein, damit sie die vorgenannten Kräfte aufnehmen können. Die Folge ist, daß für die Herstellung der Sattelkupplungsplatte relativ viel Material benötigt wird und diese daher entsprechend schwer ist.

Ein weiteres prinzipielles Problem bei derartigen Sattelkupplungen ist die Reibung zwischen der Sattelkupplungsplatte und der Aufliegerplatte am Sattelanhänger, insbesondere aufgrund der ständigen Relativbewegungen zwischen ihnen bei Kurvenfahrt.

Um diesem Problem Rechnung zu tragen, ist es bekannt (DE 35 30 467 A1; EP 0 117 319 B1; DE 44 18 533 C2), eine Beschichtung oder Befestigung von Antifriktionsmaterialien an der Sattelkupplungsplatte vorzusehen. Üblicherweise besitzen diese Antifriktionsmaterialien die Form von bogenförmigen Gleitbelägen, die vorzugsweise aus Kunststoff bestehen, und die in entsprechende Vertierungen der metallischen Sattelkupplungsplatte eingelassen und dort befestigt sind, beispielsweise durch Verkleben oder vorzugsweise durch Verschrauben, derart, daß der Gleitbelag nach oben etwas über die metallische Sattelkupplungsplatte vorsteht. Der Gleitbelag kann hufeisenförmig gebogen ausgebildet sein oder zwei etwa halbkreisförmig gebogene Gleitbeläge, wie im Fall der vorerwähnten gattungsgemäßen DE 296 03 641 U1, aufweisen, die mit der Sattelkupplungsplatte verschraubt sind.

Der Erfindung liegt die Aufgabe zugrunde, die eingangs bezeichnete Sattelkupplung so auszubilden, daß unter Reduzierung des Materialaufwandes ihr Gewicht deutlich verringert wird und ein modularer Aufbau möglich ist.

Die Lösung dieser Aufgabe gelingt gemäß der Erfindung dadurch, daß die Sattelkupplungsplatte aus zwei mechanisch miteinander verbindbaren separaten Bauteil-Komponenten besteht, mit einem oberen Auflage-Bauteil, das mit der Aufliegerplatte in Wirkverbindung tritt, und mit einem unteren Trage-Bauteil, an dem die zentrale Ausnehmung mit dem verriegelnden Schloß gebracht ist.

Dem unteren balkenartigen Trage-Bauteil ist im wesentlichen die Funktion der Kraftübertragung vom Königszapfen in die Lager und damit in den Rahmen der Sattelzugmaschine zugeordnet. Es beherbergt die Verriegelungsmechanik mit dem gegebenenfalls vorhandenen Verschleißring.

Bei der erfindungsgemäßen Sattelkupplung nimmt daher nur das untere balkenartige Trage-Bauteil die Stützlast und die vom Königszapfen eingeleiteten großen Kräfte auf, nämlich die Zugkräfte bei Fahrten im ebenen und ansteigendem Gelände, die Druckkräfte im abfallenden Gelände sowie die Quer- und Abhebekräfte bei Kurvenfahrt, so daß nur dieses Trage-Bauteil entsprechend mechanisch stabil ausgebildet werden muß, wobei durch den balkenartigen Aufbau sich eine beachtliche Materialersparnis erzielen läßt. Das obere plattenartige Auflage-Bauteil muß allein auf die Flächenlast des Sattelanhängers, auch Sattellast genannt, ausgelegt sein, da es nur die Aufgabe hat, die von der Aufliegerplatte des Sattelanhängers ausgehenden Kräfte zu bündeln und auf das Trage-Bauteil zu übertragen, wodurch sich hinsichtlich der Form dieses Bauteiles und der für seine Herstellung verwendeten Materialien gewisse konstruktive Freiheitsgrade ergeben.

Eine weitere Aufgabe des Auflage-Bauteils besteht darin, geringe Reibmomente bei der Kurvenfahrt zu gewährleisten.

Da das obere Auflage-Bauteil neben dem Abrieb im gegebenenfalls vorhandenen Verschleißring dem größten Verschleiß ausgesetzt ist, kann es nunmehr, nachdem es von der Funktion der Aufnahme der beachtlichen vom Königszapfen ausgehenden Kräfte befreit ist, insbesondere durch Wahl entsprechender Werkstoffe spezifisch auf die Forderungen
- wartungsarm
- korrosionsgeschützt
- geringes Gewicht
ausgelegt werden.

Die Aufteilung der Funktionen einer Sattelkupplung auf die beiden Bauteile erlaubt auch mit großem Vorteil eine modulare Bauweise.

Es können auf unterschiedliche Lastaufnahmen ausgelegte untere balkenartige Trage-Bauteile im Sinne einer Vormontageeinheit auf Lager gehalten und mit unterschiedlich ausgebildeten oberen Auflage-Bauteilen auf einfache und wirtschaftliche Weise kombiniert werden.

Gemäß einer ersten Ausgestaltung der Erfindung sind das Auflage-Bauteil mit dem Trage-Bauteil verschraubt. Diese Ausgestaltung erlaubt eine einfache Konstruktion.

Für die Verbindung der beiden Bauteile bieten sich dem Fachmann mehrere konstruktive Möglichkeiten an. Vorzugsweise, weil sie eine gute und einfach herzustellende Befestigung erlaubt, ist die Verbindung der beiden Bauteile mittels Schrauben. Dazu ist gemäß einer Weiterbildung der Erfindung konstruktiv an dem unteren balkenartigen Trage-Bauteil eine kreisringförmige Anformung mit mehreren Befestigungslöchern und an dem oberen Auflage-Bauteil ein deckungsgleicher Kranz von Befestigungslöchern zur Aufnahme von Befestigungsschrauben vorgesehen.

Durch die Trennung der Funktionen ergeben sich Freiheitsgrade in der Ausgestaltung des oberen Auflage-Bauteils. So ist es gemäß einer Ausgestaltung der Erfindung möglich, diese aus Metall, vorzugsweise aus Stahl, oder Aluminium oder Guß herzustellen. An ihr können Verbindungselemente für eine vorzugsweise formschlüssige Wirkverbindung mit einer Gleitschicht bildenden Gleitbelägen vorgesehen werden.

Eine Alternative dazu besteht darin, daß das obere Auflage-Bauteil in Gänze mit einer Gleitschicht überzogen ist, die vorzugsweise aus einem Kunststoff besteht, der gute Gleiteigenschaften hat, wie. z.B. Teflon, und der einen Korrosionsschutz für die Stahlplatte bildet.

Gemäß einer weiteren Ausgestaltung der Erfindung kann das obere Auflage-Bauteil in Gänze aus Kunststoff bestehen. Dabei ist vorzugsweise der Kunststoff ein glasfaserverstärkter Kunststoff und/oder ist in ihm eine Armierung in Form von Einlegeteilen vorgesehen. Es kann auch ein Mehrschichtkörper vorgesehen sein, mit einer unteren Trägerschicht und einer oberen Gleitschicht.

Auch für die den typischerweise V-förmigen Einschnitt begrenzenden Hörner sind mehrere Gestaltungsmöglichkeiten gegeben. So können diese Hörner entweder an dem oberen Auflage-Bauteil ausgebildet sein, das dann eine konventionelle Form erhält, oder die Hörner sind an dem unteren Trage-Bauteil angebracht, wodurch das obere Auflage-Bauteil dann die einfache Form eines Kreisringes mit einem V-Ausschnitt besitzen kann. Die Hörner können dabei einstückig an dem zugehörigen Bauteil angeformt sein; zur Unterstützung der modularen Bauweise ist jedoch jedes Horn zweckmäßig ein separates Bauteil, das mit dem zugehörigen Bauteil lösbar verbindbar ist. Im Verschleißfall braucht daher nur das entsprechende Horn und nicht das gesamte Bauteil ausgetauscht werden.

Auch für die Ausbildung des unteren balkenartigen Trage-Bauteils bieten sich dem Fachmann mehrere Möglichkeiten an. Gemäß einer Weiterbildung der Erfindung besteht dieses Trage-Bauteil aus drei Balken, einem mittleren Hauptbalken sowie je einem dazu parallelen seitlichen Hilfsbalken, die an den beiden Enden unter Bildung der Basis für das kupplungsseitige Lagerelement zusammengeführt sind. Dabei kann gemäß einer Weiterbildung der Erfindung das Lagerelement an der Basis einstückig angeformt sein; bevorzugt ist jedoch das Lagerelement ein separates Bauteil, das mit der Basis lösbar verbindbar ist. Auch diese Maßnahme unterstützt die Vorteile der modularen Bauweise.

Auch für die Lagerung des unteren Trage-Bauteils an der Sattelzugmaschine bestehen für den Fachmann mehrere Möglichkeiten. Gemäß einer bevorzugten Ausführungsform ist das Lagerelement ein Lagerzapfen, wobei die zugehörige Lagerschale unmittelbar im Rahmen der Sattelzugmaschine ausgebildet ist, und wobei zur Fixierung des Lagerzapfens ein schellenartiges, den Lagerzapfen oben umgreifendes Bauteil vorgesehen und mit dem Rahmen befestigt ist.

Weitere Vorteile, insbesondere hinsichtlich der Auslegung der Bauteile und einer modularen Bauweise, ergeben sich, wenn gemäß einer Weiterbildung der Erfindung das Auflage-Bauteil aus zwei separaten platttenartigen Teilen, Flügelplatten genannt, besteht, die zu beiden Seiten eines mittig am Trage-Bauteil vorgesehenen plattenartig geformten Mittelteils angeordnet sind, welches den V-Ausschnitt mit begrenzenden, vorzugsweise lösbar angebrachten Hörnern, besitzt.

Für die Lagerung einer derartigen geteilten Sattelkupplungsplatte in den Lagerelementen 5 auf der Sattelzugmaschine gibt es verschiedene konstruktive Lösungen. Eine erste Lösung besteht darin, daß die beiden Flügelplatten auf dem balkenartigen Trage-Bauteil befestigt sind, vorzugsweise damit verschraubt sind, und das Trage-Bauteil in den Lagerelementen auf der Sattelzugmaschine aufgenommen ist.

Gegenüber der vorbeschriebenen Konzeption mit einem ungeteilten Auflage-Bauteil besteht der Vorteil darin, daß die Kräfte näher an dem Balkenende des Trage-Bauteils wirken, d.h. dieses nicht so stark auf Biegung beansprucht wird.

Eine zweite Lösung besteht darin, daß das Trage-Bauteil zwei Tragebalken aufweist, auf denen die beiden Flügelplatten verschiebbar gehaltert sind, die jeweils in einem der Lagerelemente auf der Sattelzugmaschine aufgenommen sind.

Bei dieser Lösung leiten die Flügelplatten mit Vorteil die Stützlast unmittelbar in die Lagerstellen ab, d.h. die Kräfte werden direkt in den Rahmen der Satelzugmaschine abgeleitet. Ferner können durch die Verschiebbarkeit der Flügelplatten verschiedene Rahmenbreiten mit demselben Bauteil abgedeckt werden.

Eine dritte Lösung besteht darin, daß das balkenartige Trage-Bauteil an beiden Balkenenden jeweils einen Lagerzapfen aufweist, der jeweils in einem der Lagerelemente auf der Sattelzugmaschine aufgenommen ist und auf dem jeweils eine Flügelplatte gehaltert ist.

Auch bei dieser Lösung leiten die Flügelplatten die Sattellast unmittelbar in die Lagerstellen, d.h. den Rahmen, ein.

Weitere Ausgestaltungen sowie Vorteile der Erfindung ergeben sich anhand der Beschreibung von in den Zeichnungen dargestellten Ausführungsbeispielen der Erfindung.

Es zeigen:
- Fig. 1: in einer Draufsicht ein Ausführungsbeispiel für die Gestaltung des oberen Auflage-Bauteils bei einer gemäß der Erfindung zweigeteilten Sattelkupplungsplatte,
- Fig. 2: in zwei Schnittansichten A, C und einer Draufsicht B ein Ausführungsbeispiel für das untere balkenartige Trage-Bauteil bei einer zweigeteilten Kupplungsplatte gemäß der Erfindung,
- Fig. 3: eine Variante für eine austauschbare Anbringung des Gelenkzapfens an dem unteren balkenartigen Trage-Bauteil,
- Fig. 4: ein Ausführungsbeispiel für eine Lagerung des unteren Trage-Bauteils,
- Fig. 5 und 6: in verschiedenen Schnitt-Ansichten eine weitere Ausführungsform der erfindungsgemäß geteilten Sattelkupplungsplatte mit einem zweigeteilten oberen Auflage-Bauteil,
- Fig. 7: eine Variante zur Lagerung der geteilten Sattelkupplungsplatte nach Fig. 5 und 6, und
- Fig. 8: in einer perspektifischen Darstellung eine konventionelle Sattelkupplung mit einer einteiligen Sattelkupplungsplatte.

Die Fig. 8 zeigt eine konventionelle Sattelkupplung zur gelenkigen Verbindung einer Sattelzugmaschine mit einem Sattelauflieger. Sie besteht aus einer Sattelkupplungsplatte 1, die ein Kupplungsmaul 2 mit einer zentralen Ausnehmung 3 und einem dazu konzentrischen Verschleißring 6 zur verriegelbaren Aufnahme eines am Sattelauflieger inmitten einer Aufliegerplatte fest angebrachten Königszapfen mittels eines Schlosses aufweist. Zur Erhöhung der Gleitfähigkeit sind auf der Oberseite der Sattelkupplungspiatte 1 zwei Gleitbeläge 4a, b, vorzugsweise durch Verschrauben mit der Sattelkupplungsplatte, eingebracht. Die Sattelkupplungsplatte ist über Lagerbolzen mit Lagerböcken 5 verbunden, die ihrerseits fest und unverdrehbar mit dem Rahmen der Sattelzugmaschine verbunden sind, sei es unmittelbar oder mittelbar über eine Montageplatte.

Die vorstehende Sattelkupplungsplatte nach dem Stand der Technik besteht aus einem einzigen Bauteil. Da doch erhebliche Zug- und Druckkräfte über den Königszapfen auf die Sattelkupplungsplatte und von dort aus auf den Rahmen der Sattelzugmaschine eingeleitet werden müssen, ist die Sattelkupplungsplatte entsprechend massiv ausgebildet, d. h., sie besitzt ein entsprechend großes Gewicht und benötigt eine entsprechend große Menge an Material bei ihrer Herstellung.

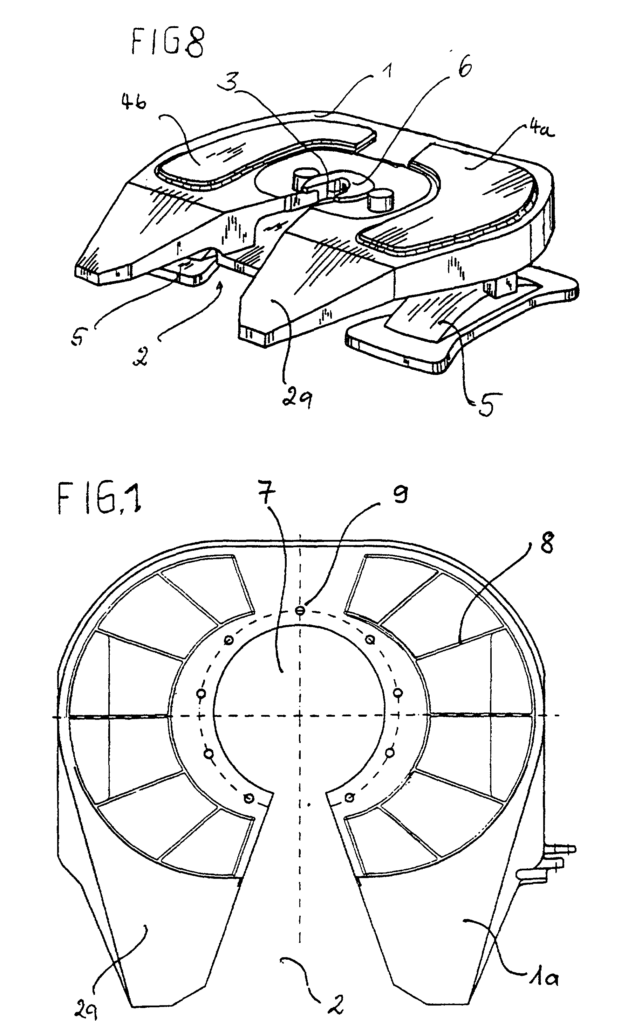

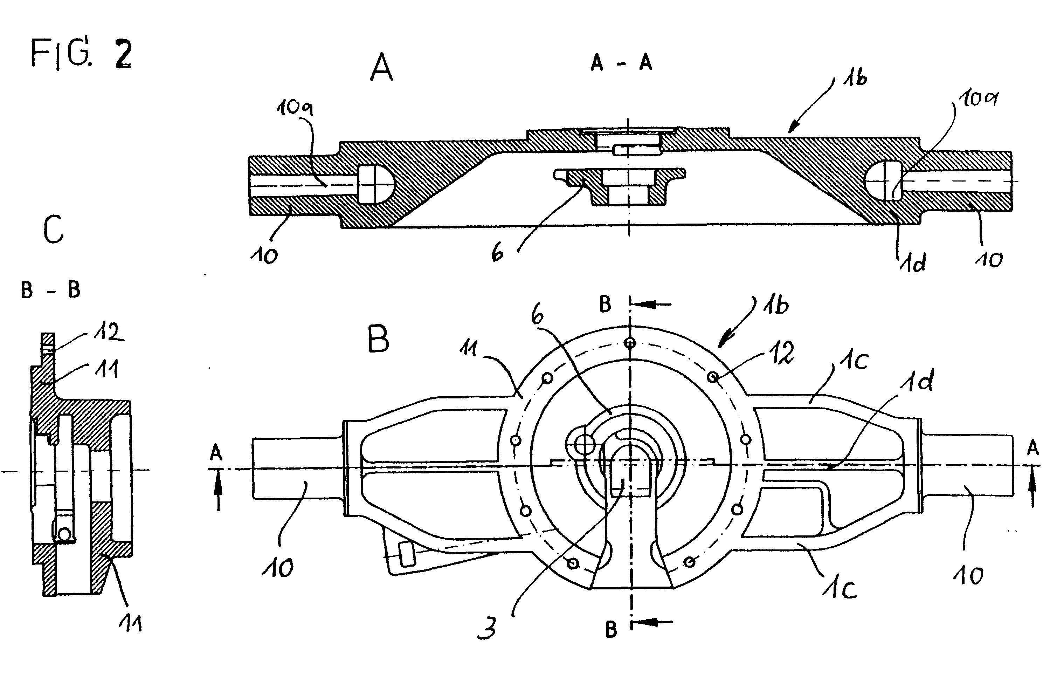

Diese Probleme werden durch die erfindungsgemäße geteilte Sattelkupplungsplatte, von der eine Ausführungsform in den Figuren 1 und 2 dargestellt ist, vermieden.

Diese Ausgestaltung der erfindungsgemäße Sattelkupplungsplatte sieht zwei mechanisch miteinander verbindbare separate Bauteile vor, ein oberes plattenförmiges Auflage-Bauteil 1a nach Figur 1, das mit der Aufliegerplatte des Sattelanhängers in Wirkverbindung tritt, und ein unteres balkenartiges Trage-Bauteil 1b gem. Figur 2, das über Lagerelemente, hier in Form von Lagerzapfen 10, mit dem Rahmen der Sattelzugmaschine verschwenkbar, verbindbar ist.

Das obere Auflage-Bauteil 1a weist in dem Ausführungsbeispiel nach Figur 1, bei dem die Gleitbeläge von der Kupplungsplatte abgenommen sind, das V-förmige Kupplungsmaul 2 und eine zentrale Öffnung 7 konzentrisch zur Ausnehmung 3 (siehe Fig. 8 bzw. 2) für einen kraftschlußfreien Durchgang des Königszapfens auf, so daß vom Königszapfen her keine Kräfte auf das obere Auflage-Bauteil eingeleitet werden. Dieses obere Auflage-Bauteil 1a braucht daher nur auf die Flächenlast des Sattelanhängers ausgelegt zu werden, da es nur die Aufgabe hat, die von der Lagerfläche ausgehenden Kräfte zu bündeln und auf das Trage-Bauteil 1b zu übertragen. Eine weitere Aufgabe des Auflage-Bauteils 1a besteht darin, geringe Reibmomente bei der Kurvenfahrt zu gewährleisten.

Dazu weist das Auflage-Bauteil 1a nach Fig. 1 mehrere sich strahlenartig radial erstreckende Nuten 8 für eine formschlüssige Verbindung mit gemäß Fig. 8 an der Unterseite der in Fig. 1 dargestellten Gleitbeläge 4a, 4b angebrachten komplementär ausgebildeten Stege auf.

Das obere Auflage-Bauteil 1a weist ferner einen Kranz von Befestigungslöchern 9 zur Befestigung mit dem unteren, in Fig. 2 dargestellten Trage-Bauteil 1b auf. Dieses Bauteil ist in Fig. 2 in drei Ansichten dargestellt, nämlich in einer Draufsicht B, einer Schnittansicht A gemäß der Schnittlinie A-A in der Ansicht B sowie einer weiteren Schnittansicht C, genommen entlang der Schnittlinie B-B in der Draufsicht B. Das untere Trage-Bauteil 1b ist dabei balkenartig mit je einem Hilfsbalken lc an jeder Seite eines Zentral-Balkens 1d ausgebildet, mit zwei Lagerzapfen 10 an den Balkenenden zur Befestigung mit dem Rahmen der Sattelzugmaschine. Diese Lager-Zapfen besitzen zur Gewichtsersparnis Hohlräume 10a.

Konzentrisch und fluchtend zu dem Kranz der Befestigungslöcher 9 gemäß Fig. 1 besitzt das balkenartige Trage-Bauteil 1b eine kreisringförmige Ausformung 11 mit Befestigungslöchern 12 für eine Schraubverbindung.

An dem unteren balkenartigen Trage-Bauteil 1b ist ferner die zentrale Ausnehmung 3 mit dem Verschleißring 6, an dem der Königszapfen anliegt, angebracht. Das Trage-Bauteil 1b besitzt ferner Ausnehmungen für die den Königszapfen verriegelnde Schloßteile, die hier nicht näher erläutert werden müssen.

Da die von dem Königszapfen betrieblich ausgehenden Zug- und Druckkräfte nur in das untere Trage-Bauteil 1b und von dort aus in den Rahmen der Sattelzugmaschine eingeleitet werden, ist dieses balkenartige Trage-Bauteil 1b entsprechend stabil ausgebildet, wobei durch die balkenartige Ausbildung im Vergleich zu einem plattenförmigen Bauteil eine beachtliche Materialersparnis bei gleicher mechanischer Festigkeit erzielbar ist.

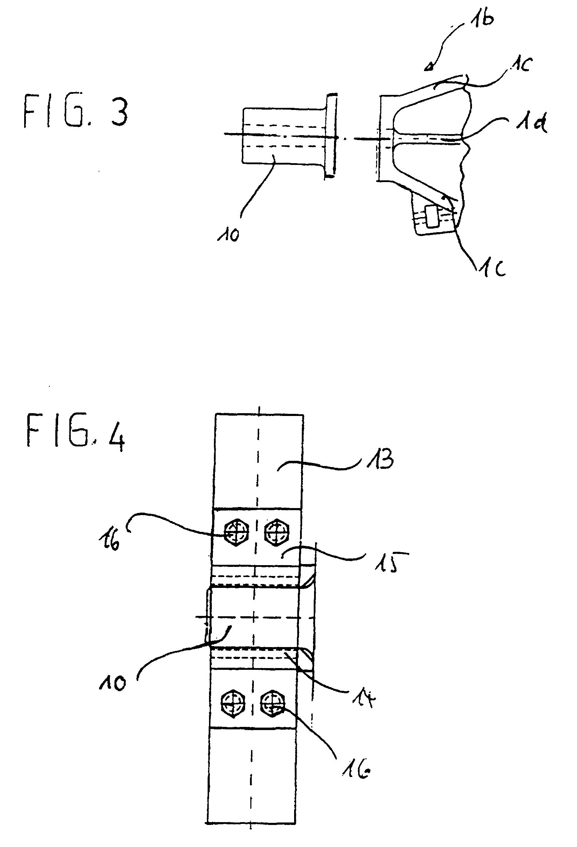

Das Lagerelement, in den dargestellten Ausführungsbeispielen in Form des Lagerzapfens 10, kann einstückig mit dem unteren balkenartigen Trage-Bauteil 1b verbunden sein. Mit Vorteil ist jedoch der Lagerzapfen gemäß Fig. 3 als eigenständiges Anbauteil, das auf übliche Art und Weise mit dem unteren Trage-Bauteil 1b lösbar mechanisch verbindbar ist, ausgebildet. Dadurch ist auch hinsichtlich der Lagerung, hier einer Schwenklagerung, eine modular Bauweise möglich, in dem unterschiedlich ausgebildete untere balkenartige Trage-Bauteile mit unterschiedlichen Lagerzapfen kombinierbar sind. Dadurch ist - ausgehend von Grundtypen - eine flexible Anpassung der Sattelkupplung an verschiedene Lastanforderungen und an unterschiedliche Bauhöhen bzw. Rahmenbreiten/-aufbauten an der Sattelzugmaschine möglich. Um beispielsweise eine größere Bauhöhe zu erzielen, wird ein gekröpftes Lagerelement verwendet.

Die Fig. 4 zeigt eine Ausführungsform für die Lagerung des Schwenklagerzapfens 10 des unteren balkenartigen Trage-Bauteils 1b unmittelbar im Rahmen 13 einer Sattelzugmaschine in einer entsprechenden Lagerschale 14, wobei ein schellenartiges Bauteil 15, welches mit Schrauben 16 an dem Rahmen 13 befestigt ist, den Lagerzapfen 10 in der Lagerschale in Position hält.

Abweichend von den dargestellten Ausführungsbeispielen sind innerhalb des Rahmens der Erfindung Modifikationen möglich.

So können die Gleitbeläge 4a,b auch anstelle mit einer formschlüssigen Verbindung, mit einer Schraubverbindung oder durch eine Klebeverbindung mit der metallischen Oberfläche der Sattelkupplungsplatte 1a verbunden sein. Es ist auch denkbar, ein metallisches oberes Auflage-Bauteil 1a vollständig mit einer Schicht aus Kunststoff zur Verbesserung der Gleiteigenschaften und zum Korrosionsschutz zu überziehen. Alternativ ist es auch denkbar, das obere Auflage-Bauteil vollständig aus Kunststoff herzustellen, vorzugsweise aus einem glasfaserverstärkten Kunststoff bzw. in Verbindung mit eingelagerten Armierungen. Dabei kann gegebenenfalls zusätzlich eine die Gleitfähigkeit erhöhende Schicht auf dem Kunststoffteil aufgebracht sein.

Die Konfiguration des oberen Auflage-Bauteils 1a weist vorzugsweise, wie in Fig. 1 dargestellt, die übliche Form einer Sattelkupplungsplatte auf. Es ist jedoch auch denkbar, die Hörner 2a des Kupplungsmaules 2, die Einführfinger, an dem unteren balkenartigen Trage-Bauteil 1b vorzusehen. Das obere Auflage-Bauteil 1a hat dann die Form einer Ringscheibe mit einem V-förmigen Ausschnitt.

Die Hörner 2a sind dabei vorzugsweise, analog den Lagerzapfen 10 in Fig. 3, als getrennte Bauteile im Sinne der Unterstützung der modularen Bauweise ausgelegt und lösbar an dem zugehörigen Bauteil angebracht insb. verschraubt. Wenn sie verschlissen sind, brauchen nur sie und nicht das gesamte zugehörige Bauteil ausgetauscht zu werden.

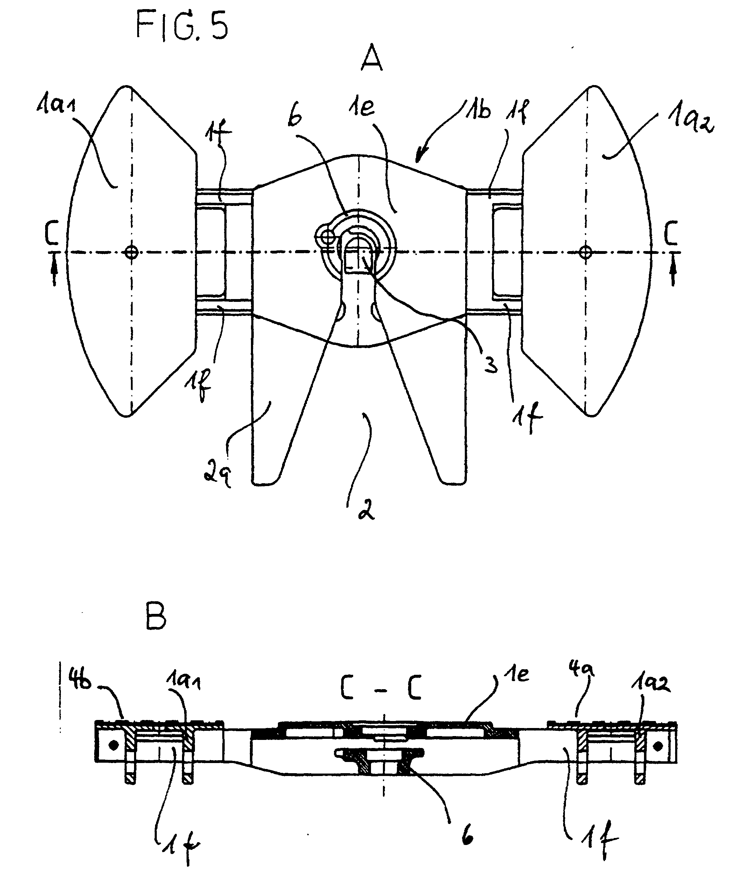

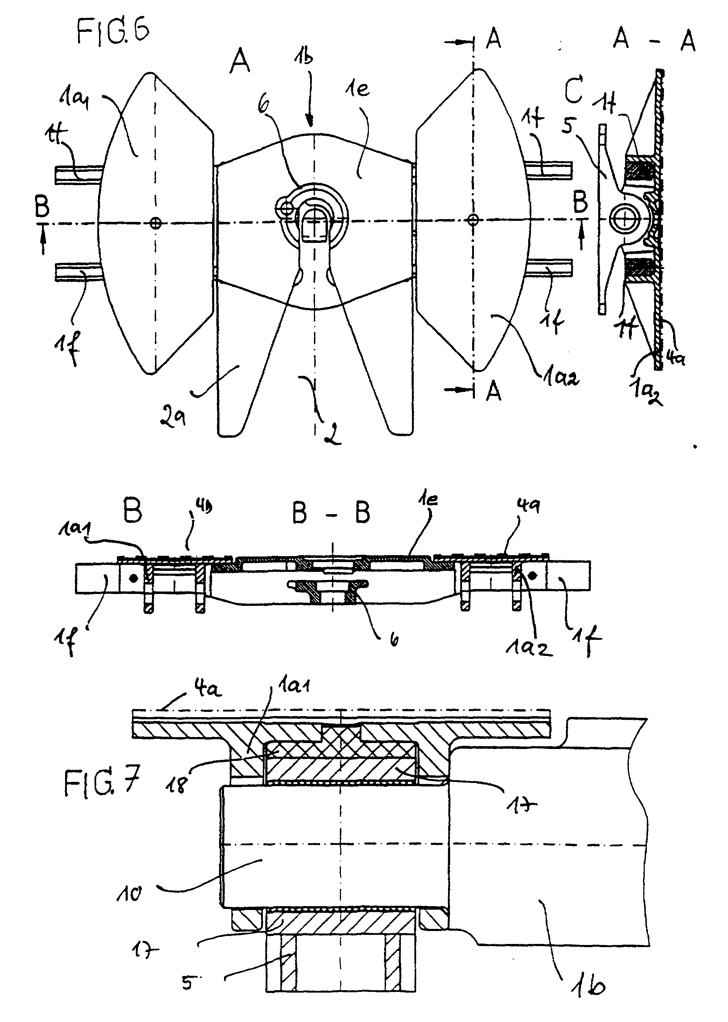

In den Figuren 5 und 6 ist eine Ausführungsform der erfindungsgemäßen Sattelkupplung dargestellt, bei der, wie bereits erwähnt, an dem balkenartigen Trag-Bauteil 1 b ein Mittelteil 1 e mit den Hörnern 2 a und dem Kupplungsmaul 2 ausgebildet ist. Dieses Mittelteil 1 e kann einstückig angeformt sein (wie dargestellt) oder auch als separates Teil im Sinne einer modularen Bauweise wechselbar befestigt sein.

Bei der Ausführungsform nach den Figuren 5 und 6 ist das obere Auflage-Bauteil zweigeteilt, wobei die beiden Teile, als Flügelplatten 1 a1 und 1 a2 bezeichnet, zu beiden Seiten des Mittelteils angeordnet sind. Diese beiden Flügelplatten sind vorzugsweise spiegelbildlich ausgebildet. Sie sind dabei etwas höher als der Mittelteil 1 e, vorzugsweise ca. 3 mm, d.h. sie nehmen analog dem Auflage-Bauteil nach Fig. 1 die Flächenlast des Sattelanhängers auf und gewährleisten durch den auf ihnen aufgebrachten Gleitbelag 4 a, 4 b für geringe Reibmomente bei Kurvenfahrt.

Das Trag-Bauteil 1 b weist, anders als in Fig. 2, nicht drei Balkenteile 1 c und 1 d, die in einen Lagerzapfen 10 einmünden, sondern zwei Balkenteile 1 f auf, auf denen die Flügelplatten 1 a1, 1 a2 verschiebbar gehaltert sind, damit sie quasi auf die jeweilige Rahmenbreite der Sattelzugmaschine einstellbar sind.

Für die Einleitung der auf die Flügelplatten wirkenden Kräfte in den Rahmen der Sattelzugmaschine sind verschiedene konstruktive Lösungen denkbar.

Bei der Ausführungsform nach den Figuren 5 und 6 sind die beiden Flügelplatten jeweils mit einem Lagerbock 5 verbunden (Fig. 6, Teil C), der seinerseits jeweils an dem Rahmen der Sattelzugmaschine befestigt ist. Bei dieser Ausführungsform tragen somit die Flügelplatten 1 a1, 1 a2 selbst die Lagerstellen. Dadurch leiten die Flügelplatten die Flächenlast des Sattelanhängers unmittelbar in die Lagerstellen, d.h. in den Rahmen der Sattelzugmaschine ein, so daß diese Last nicht von dem Trage-Bauteil 1 b aufgenommen werden muß.

Es ist aber auch möglich, am Trage-Bauteil 1 b analog der Ausführung nach Fig. 2 einen Lagerzapfen 10 auszubilden, d.h. die Lagerstellen analog Fig. 3 am Trage-Bauteil 1 b anzuordnen, und die Flügelplatten 1 a1, 1 a2 auf irgendeine Weise mit dem Trage-Bauteil 1 b zu verbinden, insbesondere zu verschrauben. Bei einer derartigen Ausbildung wird die Flächenlast des Sattelanhängers, aufgenommen von den Flügelplatten, über das Trage-Bauteil 1b in die Lagerstellen eingeleitet, jedoch näher den Balkenenden gegenüber der Ausrührung nach den Fig. 1 und 2.

Es besteht aber auch die in Fig. 7 dargestellte Möglichkeit, daß das Trage-Bauteil 1 b an beiden Seiten mit einem Lagerzapfen 10 versehen ist, auf dem jeweils die zugehörige Flügelplatte 1 a1, 1 a2 gelagert ist. Auch hierbei wird die Last direkt in den Rahmen eingeleitet.

Der Lagerzapfen 10 ist in einer Lagerbuchse 17 des Lagerelementes 5 gelagert, unter Zwischenschaltung einer oberen elastischen Einlage 18, um eine gewisse Verschwenkbarkeit der Flügelplatte 1a1 zu gewährleisten.

In den dargestellten und beschriebenen Ausführungsbeispielen ist die Sattelkupplung gegenüber einer durch die Königszapfenachse vorgegebene vertikale Achse unverdrehbar befestigt. Es ist jedoch auch möglich, durch den Einbau von Wälzlagern, z.B. zwischen beiden Bauteilen, eine entsprechende Verdrehbarkeit um eine vertikale Achse vorzusehen, wodurch sich die Reibungsprobleme maßgebend vermindern.

## Patentansprüche

1. Sattelkupplung zur gelenkigen Verbindung einer Sattelzugmaschine mit einem Sattelanhänger, mit einer auf der Sattelzugmaschine über Lagerelemente (5, 10) gehalterten Sattelkupplungsplatte (1), die einen Ausschnitt (2) mit einer zentralen Ausnehmung (3) und einem Schloß zur verriegelbaren Aufnahme eines am Sattelanhänger inmitten einer Aufliegerplatte fest angebrachten Königszapfen besitzt, und die eine reibungsmindernde Gleitschicht (4a,b) aufweist, **dadurch gekennzeichnet, daß** die Sattelkupplungsplatte (1) aus zwei mechanisch miteinander verbindbaren separaten Bauteil-Komponenten besteht, mit einem oberen Auflage-Bauteil (1a), das mit der Aufliegerplatte in Wirkverbindung tritt und mit einem unteren Trage-Bauteil (1b), an dem die zentrale Ausnehmung (3) mit dem verriegelnden Schloß angebracht ist.

2. Sattelkupplung nach Anspruch 1, **dadurch gekennzeichnet, daß** das Auflage-Bauteil (1a) einstückig plattenartig und das Trage-Bauteil (1b) balkenartig ausgebildet sind, wobei das Auflage-Bauteil (1a) neben der Gleitschicht (4a, b) eine zentrale Öffnung (7) konzentrisch zur Ausnehmung (3) für einen kraftschlußfreien Durchgang des Königszapfens besitzt.

3. Sattelkupplung nach Anspruch 1 oder 2, **dadurch gekennzeichnet, daß** das Auflage-Bauteil (1a) mit dem Trage-Bauteil (1b) verschraubt ist.

4. Sattelkupplung nach Anspruch 2 und 3, **dadurch gekennzeichnet, daß** an dem unteren balkenartigen Trage-Bauteil (1b) eine kreisringförmige Anformung (11) mit mehreren Befestigungslöchern (12), und an dem oberen plattenartigen Auflage-Bauteil (1a) ein deckungsgleicher Kranz von Befestigungslöchern (9) zur Aufnahme von Befestigungsschrauben vorgesehen ist.

5. Sattelkupplung nach einem der Ansprüche 1 bis 4, **dadurch gekennzeichnet, daß** das Auflage-Bauteil (1a) aus Metall, vorzugsweise aus Stahl, oder Aluminium, oder Guß, hergestellt ist.

6. Sattelkupplung nach Anspruch 5, **dadurch gekennzeichnet, daß** das obere Auflage-Bauteil (1a) Verbindungselemente (8) für eine vorzugsweise formschlüssige Wirkverbindung mit eine Gleitschicht bildenden Gleitbelägen (4a, b) aufweist.

7. Sattelkupplung nach einem der Ansprüche 1 bis 3, **dadurch gekennzeichnet, daß** das obere Auflage-Bauteil (1a) aus Kunststoff, vorzugsweise einem Mehrschichten-Körper besteht.

8. Sattelkupplung nach Anspruch 7, **dadurch gekennzeichnet, daß** als Kunststoff ein glasfaserverstärkter Kunststoff und/oder eine Armierung in Form von Einlegeteilen vorgesehen ist.

9. Sattelkupplung nach einem der Ansprüche 1 bis 8, bei der der Ausschnitt (2) V-förmig ausgebildet ist und beidseitig von je einem Horn (2a) als Einführhilfe für den Königszapfen begrenzt ist, **dadurch gekennzeichnet, daß** die Hörner mit dem V-förmigen Ausschnitt an dem oberen Auflage-Bauteil (1a) vorgesehen sind.

10. Sattelkupplung nach einem der Ansprüche 1 bis 8, bei der der Ausschnitt (2) V-förmig ausgebildet ist und beidseitig von je einem Horn (2a) als Einführhilfe für den Königszapfen begrenzt ist, **dadurch gekennzeichnet, daß** das obere Auflage-Bauteil (1a) die Form eines Kreisringes mit einem V-Ausschnitt deckungsgleich zu dem Ausschnitt (2) besitzt und die diesen Ausschnitt (2) begrenzenden Hörner an dem unteren Trage-Bauteil (1b) angebracht sind.

11. Sattelkupplung nach Anspruch 9 oder 10, **dadurch gekennzeichnet, daß** jedes Horn ein separates Bauteil ist, welches mit dem zugehörigen Bauteil (1a, 1b) lösbar verbindbar, vorzugsweise verschraubbar, ist.

12. Sattelkupplung nach einem der Ansprüche 1 bis 11, **dadurch gekennzeichnet, daß** das untere balkenartige Trage-Bauteil (1b) aus drei Balken besteht, einem mittleren Hauptbalken (1d) sowie je einem dazu parallelen seitlichen Hilfsbalken (lc), die an den beiden Enden unter Bildung der Basis für das kupplungsseitige Lagerelement (10) auf der Sattelzugmaschine zusammengerührt sind.

13. Sattelkupplung nach Anspruch 12, **dadurch gekennzeichnet, daß** das Lagerelement (10) an der Basis einstückig angeformt ist.

14. Sattelkupplung nach Anspruch 12, **dadurch gekennzeichnet, daß** das Lagerelement (10) ein separates Bauteil ist, das mit der Basis lösbar verbindbar ist.

15. Sattelkupplung nach einem der Ansprüche 12 bis 14, **dadurch gekennzeichnet, daß** das Lagerelement (10) ein Lagerzapfen ist und die zugehörige Lagerschale (14) unmittelbar im Rahmen (13) der Sattelzugmaschine ausgebildet ist, und daß zur Fixierung des Lagerzapfens ein schellenartiges, den Lagerzapfen an der Oberseite umgreifendes Bauteil (15) vorgesehen und auf dem Rahmen (13) befestigt ist.

16. Sattelkupplung nach Anspruch 1 oder einem der Ansprüche 1 bis 8, **dadurch gekennzeichnet, daß** das Auflage-Bauteil aus zwei separaten plattenartigen Teilen (Flügelplatten 1a1, 1a2) besteht, die zu beiden Seiten eines mittig am Trage-Bauteil (1a) vorgesehenen plattenartig geformten Mittelteil (1e) angeordnet sind, welches den Ausschnitt (2) mit begrenzenden, vorzugsweise lösbar angebrachten Hörnern (2a) besitzt.

17. Sattelkupplung nach Anspruch 16, **dadurch gekennzeichnet, daß** die beiden Flügelplatten (1a1, 1a2) auf dem balkenartigen Trag-Bauteil (1b) befestigt sind, vorzugsweise damit verschraubt sind, und das Trage-Bauteil (1b) in den Lagerelementen (5) auf der Sattelzugmaschine aufgenommen sind.

18. Sattelkupplung nach Anspruch 16, **dadurch gekennzeichnet, daß** das Trage-Bauteil (1b) zwei Tragebalken (1f) aufweist, an denen die beiden Flügelplatten (1a1,1a2) verschiebbar gehaltert sind, und die jeweils in einem der Lagerelemente (5) auf der Sattelzugmaschine aufgenommen sind.

19. Sattelkupplung nach Anspruch 16, **dadurch gekennzeichnet, daß** das balkenartige Trage-Bauteil (1b) an beiden Balkenenden jeweils einen Lagerzapfen (10) aufweist, der jeweils in einem der Lagerelemente (5) auf der Sattelzugmaschine aufgenommen ist und auf dem jeweils eine Flügelplatte (1a1, 1a2) gehaltert ist

## Claims

1. Semitrailer coupling for the articulated connection of a semitrailer tractor to a semitrailer, with a semitrailer coupling plate (1) which is held on the semitrailer tractor by way of bearing elements (5, 10), which has a cutout (2) with a central recess (3) and a lock for the lockable reception of a kingpin rigidly attached in the middle of a semitrailer plate to the semitrailer, and which has a friction-reducing slide layer (4a, b), **characterised in that** the semitrailer coupling plate (1) comprises two separate structural components mechanically connectable to each other, with an upper bearing component (1a) which enters into operative association with the semitrailer plate and with a lower supporting component (1b), on which the central recess (3) with the locking lock is provided.

2. Semitrailer coupling according to claim 1, **characterised in that** the bearing component (1a) is of a one-piece plate-type design and the supporting component (1b) is of a bar-type design, wherein the bearing component (1a) has beside the slide layer (4a, b) a central opening (7) concentric with the recess (3) for friction-free passage of the kingpin.

3. Semitrailer coupling according to claim 1 or 2, **characterised in that** the bearing component (1a) is bolted to the supporting component (1b).

4. Semitrailer coupling according to one of claims 1 to 3, **characterised in that** on the lower bar-type supporting component (1b) an annular-form configuration (11) with multiple fixing holes (12) is provided and on the upper plate-type bearing component (1a) a congruent ring of fixing holes (9) is provided for the reception of fixing screws.

5. Semitrailer coupling according to one of claims 1 to 4, **characterised in that** the bearing component (1a) is made from metal, preferably from steel, or aluminium, or cast iron.

6. Semitrailer coupling according to claim 5, **characterised in that** the upper bearing component (1a) has connecting elements (8) for a preferably positive operative connection with slide linings (4a, b) providing a slide layer.

7. Semitrailer coupling according to one of claims 1 to 3, **characterised in that** the upper bearing component (1a) is made from plastics, preferably a multilayer body.

8. Semitrailer coupling according to claim 7, **characterised in that** as plastics a fibreglass-reinforced plastics is provided and/or a reinforcement in the form of inserts is provided.

9. Semitrailer coupling according to one of claims 1 to 8, in which the cutout (2) is formed in a V-shape and each side of it is delimited by a horn (2a) as an insertion aid for the kingpin, **characterised in that** the horns, together with the V-shaped cutout, are provided on the upper bearing component (1a).

10. Semitrailer coupling according to one of claims 1 to 8, in which the cutout (2) is formed in a V-shape and each side of it is delimited by a horn (2a) as an insertion aid for the kingpin, **characterised in that** the upper bearing component (1a) takes the form of a ring with a V-cutout congruent with the cutout (2) and the horns delimiting this cutout (2) are provided on the lower supporting component (1b).

11. Semitrailer coupling according to claim 9 or 10, **characterised in that** each flange is a separate component which is detachably joinable, preferably bolted, to the associated component (1a, 1b).

12. Semitrailer coupling according to one of claims 1 to 11, **characterised in that** the lower bar-type supporting component (1b) is made from three bars, a middle main bar (1d) and a parallel auxiliary bar (1c) on each side of it, which are brought together at both ends, forming the base for the coupling-side bearing element (10) on

13. Semitrailer coupling according to claim 12, **characterised in that** the bearing element (10) is formed in one piece with the base.

14. Semitrailer coupling according to claim 12, **characterised in that** the bearing element (10) is a separate component which is detachably connected to the base.

15. Semitrailer coupling according to one of claims 12 to 14, **characterised in that** the bearing element (10) is a bearing journal and the associated bearing shell (14) is formed directly in the frame (13) of the semitrailer tractor, and that for fixing the bearing journal a clamp-type component (15) bounding the upper side of the bearing journal is provided and fastened to the frame (13).

16. Semitrailer coupling according to one of claims 1 to 8, **characterised in that** the bearing component comprises two separate plate-type parts (wing plates 1a1, 1a2) arranged at respective sides of a plate-type shaped middle part (1e) which is provided at the middle of the supporting component (1a), and which has the cutout (2) with delimiting, preferably removably attached horns (2a).

17. Semitrailer coupling according to claim 16, **characterised in that** the two wing plates (1a1, 1a2) are fixed on the bar-type supporting component (1b), preferably screwed thereto, and the supporting component (1b) is received in the bearing elements (5) of the semitrailer tractor.

18. Semitrailer coupling according to claim 16, **characterised in that** the supporting component (1b) has two supporting bars (1f), on which the two wing plates (1a1, 1a2) are movably held, and each of which is received in one of the bearing elements (5) on the semitrailer tractor.

19. Semitrailer coupling according to claim 16, **characterised in that** the bar-type supporting component (1b) has on each bar end a bearing journal (10), each of which is received in one of the bearing elements (5) on the semitrailer tractor and on each of which a wing plate (1a1, 1a2) is held.

## Revendications

1. Sellette d'attelage pour la liaison articulée d'un véhicule tracteur de semi-remorque à une semi-remorque, comprenant une plaque de sellette d'attelage (1) fixée sur le véhicule tracteur de semi-remorque via des éléments faisant office de paliers (5, 10), ladite plaque possédant une découpe (2) munie d'un évidement central (3) et d'une serrure pour la réception verrouillable d'un pivot central appliqué à demeure sur la semi-remorque au milieu d'une plaque de soutien et présentant une couche de glissement (4a, b) diminuant la friction, **caractérisée en ce que** la plaque de sellette d'attelage (1) est constituée de deux composants de structure séparés qui peuvent être reliés l'un à l'autre par voie mécanique comprenant une structure d'appui supérieure (1a) qui entre en liaison d'entraînement avec la plaque de soutien et une structure de support inférieure (1b) sur laquelle est appliqué l'évidement central (3) comprenant la serrure verrouillable.

2. Sellette d'attelage selon la revendication 1, **caractérisée en ce que** la structure d'appui (1a) est réalisée en forme de plaque en une seule pièce et la structure de support (1b) est réalisée en forme de poutre, dans laquelle la structure d'appui (1a) possède, en plus de la couche de glissement (4a, b), une ouverture centrale (7) disposée en position concentrique par rapport à l'évidement (3) pour un passage exempt d'adhérence du pivot central.

3. Sellette d'attelage selon la revendication 1 ou 2, **caractérisée en ce que** la structure d'appui (1a) peut être vissée à la structure de support (1b).

4. Sellette d'attelage selon les revendications 2 et 3, **caractérisée en ce qu'**on prévoit, sur la structure de support inférieure (1b) en forme de poutre, un façonnement (11) en forme d'anneau de cercle comportant plusieurs trous de fixation (12), et sur la structure d'appui supérieure en forme de plaque (1a), une couronne coïncidante de trous de fixation (9) pour la réception de vis de fixation.

5. Sellette d'attelage selon l'une quelconque des revendications 1 à 4, **caractérisée en ce que** la structure d'appui (1a) est fabriquée en métal, de préférence en acier ou en aluminium ou encore en fonte.

6. Sellette d'attelage selon la revendication 5, **caractérisée en ce que** la structure d'appui supérieure (1a) présente des éléments de liaison (8) pour une liaison d'entraînement de préférence de type mécanique avec des revêtements de glissement (4a, b) formant une couche de glissement.

7. Sellette d'attelage selon l'une quelconque des revendications 1 à 3, **caractérisée en ce que** la structure d'appui supérieure (1a) est constituée d'une substance synthétique, de préférence d'un corps multicouche.

8. Sellette d'attelage selon la revendication 7, **caractérisée en ce qu'**on prévoit, à titre de substance synthétique, une substance synthétique renforcée avec des fibres de verre et/ou une armature sous la forme de pièces d'insertion.

9. Sellette d'attelage selon l'une quelconque des revendications 1 à 8, dans laquelle la découpe (2) est réalisée en V et est délimitée de part et d'autre par respectivement un cornet (2a) à titre d'adjuvant d'entrée pour le pivot central, **caractérisée en ce que** les cornets avec la découpe en V sont prévus sur la structure d'appui supérieure (1a).

10. Sellette d'attelage selon l'une quelconque des revendications 1 à 8, dans laquelle la découpe (2) est réalisée en V et est délimitée de part et d'autre par respectivement un cornet (2a) à titre d'adjuvant d'entrée pour le pivot central, **caractérisée en ce que** la structure d'appui supérieure (1a) possède la forme d'un anneau de cercle avec une découpe en V qui coïncide avec la découpe (2) et les cornets délimitant cette découpe (2) sont appliqués sur la structure de support inférieure (1b).

11. Sellette d'attelage selon la revendication 9 ou 10, **caractérisée en ce que** chaque cornet représente une structure séparée qui peut être reliée, de préférence vissée, de manière amovible avec la structure correspondante (1a, 1b).

12. Sellette d'attelage selon l'une quelconque des revendications 1 à 11, **caractérisée en ce que** la structure inférieure de support en forme de poutre (1b) est constituée par trois poutres, une poutre principale médiane (1d) ainsi que respectivement une poutre auxiliaire latérale parallèle à la première citée (1c), qui sont guidées de manière conjointe aux deux extrémités en formant la base pour l'élément (10) faisant office de palier côté sellette sur le véhicule tracteur de semi-remorque.

13. Sellette d'attelage selon la revendication 12, **caractérisée en ce que** l'élément (10) faisant office de palier est façonné en une chaque pièce sur la base.

14. Sellette d'attelage selon la revendication 12, **caractérisée en ce que** l'élément (10) faisant office de palier est une structure séparée qui peut être reliée de manière amovible à la base.

15. Sellette d'attelage selon l'une quelconque des revendications 12 à 14, **caractérisée en ce que** l'élément (10) faisant office de palier est un tourillon et la coquille de coussinet correspondante (14) est réalisée directement dans le châssis (13) du véhicule tracteur de semi-remorque, et **en ce que**, pour la fixation du tourillon, on prévoit une structure (15) en forme de collier de serrage qui enserre le tourillon sur son côté supérieur et qui est fixée au châssis (13).

16. Sellette d'attelage selon la revendication 1 ou selon l'une quelconque des revendications 1 à 8, **caractérisée en ce que** la structure d'appui est constituée par deux éléments séparés en forme de plaques (plaque en forme d'ailes 1a1, 1a2) qui sont disposées de part et d'autre d'un élément médian (1e) réalisé en forme de plaque et prévu en position centrale sur la structure de support (1a), qui possède la découpe (2) comprenant des cornets (2a) de délimitation, de préférence appliqués de manière amovible.

17. Sellette d'attelage selon la revendication 16, **caractérisée en ce que** les deux plaques en forme d'ailes (1a1, 1a2) sont fixées sur la structure de support (1b) en forme de poutre, de préférence sont vissées à cette dernière, et la structure de support (1b) vient s'insérer dans les éléments (5) faisant office de paliers sur le véhicule tracteur de semi-remorque.

18. Sellette d'attelage selon la revendication 16, **caractérisée en ce que** la structure de support (1b) présente deux poutres de support (1f) auxquelles sont fixées en coulissement les deux plaques en forme d'ailes (1a1, 1a2) et qui viennent s'insérer respectivement dans un des éléments (5) faisant office de paliers sur le véhicule tracteur de semi-remorque.

19. Sellette d'attelage selon la revendication 16, **caractérisée en ce que** la structure de support (1b) en forme de poutre présente, aux deux extrémités des poutres, respectivement un tourillon (10) qui vient s'insérer respectivement dans un des éléments (5) faisant office de paliers sur le véhicule tracteur de semi-remorque et sur lequel est maintenue respectivement une plaque en forme d'aile (1a1, 1a2).
